# EUROPEAN PATENT APPLICATION

(11) **EP 0 949 841 A2**
(43) Date of publication of application: **13.10.1999**
(21) Application number: 99301977.7
(22) Date of filing: 15.03.1999
(51) Int. Cl.: H04Q 11/04

(54) **Low bandwidth AAL5 data communication system**

(30) Priority: 07.04.1998 US 56897
(71) Applicant: NORTEL NETWORKS CORPORATION, Montreal, Quebec H2Y 3Y4 (CA)
(72) Inventor: Singh, Balbir, Leyton, London E15 2BP (GB); Balchin, Matthew Spencer, Ross on Wye, Herefordshire HR9 5SF (GB); Chambers, Christopher John, Bishops Stortford, Hert. CM22 7LY (GB)
(74) Representative: Franks, Robert Benjamin

(57) **Abstract**

A low bandwidth data message is transferred between at least two entities (301, 307) in an ATM network by packaging the message into an AAL5 frame and then segmenting the frame into at least one ATM cell for transmission across a virtual channel 304). A receiving entity performs a substantially reverse operation in order to retrieve the message. Low bandwidth data may comprise data transfer at a rate of 1-5Mb per second, and preferably 2 Mb per second or data transferred at a rate of 1% or less of an operating speed of a processor in an ATM entity.

## Description

### Field of the Invention

The present invention relates to transfer of data, and in particular, although not exclusively, to transferring data in an asynchronous transfer mode communications network.

### Background to the Invention

The transfer of data in an asynchronous transfer mode (ATM) communications network usually requires specialized hardware which tends to be expensive in terms of purchase cost, installation and maintenance, etc. Although ATM hardware is mainly intended to provide efficient error free transfer of data such as video or audio information which require a continuous transfer stream of high volume data (high bandwidth data of up to hundreds of megabits per second), there are occasions when it may be necessary to transfer data of a lower bandwidth, for example transferring data describing commands for functions such as setting up connections in the network.

In such cases, purchase and installation of dedicated ATM hardware for transfer of the low bandwidth data may not be cost effective. Another possible solution may be to design custom hardware or modify existing ATM devices in order to provide a low bandwidth data transfer facility. However, such hardware modifications can take considerable time and money to design, develop and manufacture and can also use valuable real estate and power of existing hardware.

A further problem arising from using custom hardware is that it needs to be compatible with existing ATM protocols and interface with existing software applications in order to function, again at considerable possible expense in terms of time, money and hardware real estate.

### Summary of the Invention

An object of the present invention is to provide a cost effective means for transferring low bandwidth data of approximately 1 to 5 megabits (Mb) per second and preferably up to 2Mb per second between at least two ATM entities in an ATM network. A further object is to give a clean interface to higher level software and to provide statistics describing the data transfer. Such an entity suitably comprises a processor, and the low bandwidth data is preferably transferred at a rate of 1% or less of the processor's operating (clock) speed.

According to a first aspect of the present invention there is provided apparatus for transmitting low bandwidth data to at least one asynchronous transfer mode (ATM) entity (301, 307) across an ATM network, said apparatus characterized by comprising: means for packaging said low bandwidth data into at least one ATM adaptation layer (AAL) 5 frame (305); and means for segmenting said AAL5 frame into at least one ATM cell for transfer.

Preferably said low bandwidth data comprises data transferred at a rate of 1 to 5 megabits (Mb) per second, and preferably up to 2 Mb per second.

Preferably each said ATM entity comprises at least one processor, and said low bandwidth data is transferred at a rate of 1% or less of an operating rate of said processor.

Preferably the apparatus further comprises: means for receiving message data from application software; and means for converting said message data into said low bandwidth data.

According to a second aspect of the present invention there is provided an apparatus for receiving low bandwidth message data from at least one asynchronous transfer mode (ATM) entity across an ATM network, said apparatus characterized by comprising: means for receiving at least one ATM cell; means for converting said ATM cell into at least one ATM adaptation layer (AAL) 5 frame; and means for converting said AAL5 frame into said low bandwidth data message.

Preferably said apparatus further comprises: means for extracting a cell type identifier from said received ATM cells , said identifier capable of identifying said cells as being associated with said AAL5 frame. Preferably said apparatus further comprises: means for communicating message data with application software; and means for converting said low bandwidth data into said message data. Preferably said low bandwidth data comprises data transferred at a rate of 1 to 5 Mb per second, and preferably up to 2 Mb per second. Preferably a said ATM entity comprises at least one processor, said low bandwidth data being transferred at a rate of 1% or less of operating speed of said processor. Preferably said apparatus further comprises: means for identifying said ATM cells as being associated with at least one AAL5 frame.

According to a third aspect of the present invention there is provided apparatus for transferring low bandwidth data between at least two entities (301, 307) in an asynchronous transfer mode (ATM) communications network, said apparatus characterized by comprising: an ATM device; and means for converting said low bandwidth data into at least one ATM cell, wherein said means for converting data operates to package said low bandwidth data into an AAL5 frame and segment said AAL5 frame into at least one ATM cell.

Preferably said low bandwidth data comprises data transferred at a rate of 1 to 5 megabits (Mb) per second, and preferably up to 2 Mb per second. Preferably said ATM device comprises at least one processor, and said low bandwidth data is transferred at a rate of 1% or less of an operating speed of said processor.

According to fourth aspect of the present invention there is provided apparatus for transferring low bandwidth data between at least two entities (301, 307) in an asynchronous transfer mode (ATM) communications network, said apparatus characterized by comprising: a processor and memory; at least one ingress device (518, 605) comprising data storage means for storing said low bandwidth data prior to transmission from a first said entity; at least one egress device (517, 604) comprising data storage means for storing said low bandwidth data upon receipt at a second said entity; and at least two ATM ports (506, 509, 606, 607) capable of connecting said entities, wherein said processor is configured to use said ingress devices (518, 605) to package said low bandwidth data into at least one AAL5 frame and segment said AAL5 frame into at least one ATM cell; and said processor is further configured to use said egress device (517, 604) to reassemble said ATM cells into at least one AAL5 frame and extract said low bandwidth data from said AAL5 frame.

Preferably said low bandwidth data comprises data transferred at a rate of 1 to 5 Megabits per second, and preferably up to 2 megabits per second. Preferably said low bandwidth data is transferred at a rate of 1% or less of an operating speed of said processor.

According to a fifth aspect of the present invention there is provided a method of transmitting low bandwidth data to at least one asynchronous transfer mode (ATM) entity (301, 307) across an ATM network, said method characterized by comprising the steps of: packaging said low bandwidth data into an ATM adaptation layer (AAL) 5 frame (703); and segmenting said AAL5 frame into at least one ATM cell (704).

Preferably said low bandwidth data comprises data transferred at a rate of 1 to 5 megabits (Mb) per second, and preferably up to 2 Mb per second. Preferably said ATM entity comprises at least one processor, and low bandwidth data as stated before is transferred at a rate of 1% or less of an operating speed of said processor.

Preferably the method further comprises the steps of: receiving message data from an application software; and converting said message data into said low bandwidth data for transmission.

According to a sixth aspect of the present invention there is provided a method of receiving low bandwidth data at at least one transmodem ( ATM) entity said method characterized by comprising the steps of: receiving at least one ATM cell (1101); packaging said ATM cells into at least one ATM adaptation layer (AAL) 5 frame(1104); and converting said AAL5 frame into said low bandwidth data message.

Preferably said method further comprises the steps of: extracting a cell type identifier (1203) from said received ATM cells, said identifier capable of identifying said cells as being associated with said AAL5 frame. Preferably said method further comprises the step of: converting said low bandwidth data into a message data suitable for application software. Preferably said low bandwidth data comprises data transferred at a rate of 1-5 Mb per second, and preferably up to 2 Mb per second. Said low bandwidth data may be transferred at a rate of 1 % or less of an operation speed of said processor.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates communication between two ATM entities by means of an ATM adaptation layer (AAL);
Fig. 2 illustrates schematically protocol stacks, including an AAL, which may be used to transfer data between entities in an ATM network;
Fig. 3 illustrates schematically part of an ATM network wherein ATM entities may communicate according to a preferred embodiment, including an illustration of a protocol stack;
Fig. 4 illustrates schematically steps typically executed according to the preferred embodiment in order to transmit and receive messages between ATM entities;
Fig. 5 details components of the ATM network illustrated in Fig. 3;
Fig. 6 illustrates schematically software modules which may be required by the preferred embodiment;
Fig. 7 illustrates schematically steps preferably executed by the preferred embodiment in order to prepare a low bandwidth data message for transfer across the ATM network;
Fig. 8 illustrates schematically relationships between the steps of Fig. 7 and the software modules of Fig. 6;
Fig. 9 illustrates schematically an AAL5 frame, an ATM cell and the ATM cell's header;
Fig. 10 illustrates schematically steps preferably executed by the preferred embodiment in order to prepare ATM cells for transmission;
Fig. 11 illustrates schematically steps preferably executed upon receipt of an ATM cell, including a determine message type and extract message set;
Fig. 12 illustrates steps preferably executed during the determine message type and extract message step of Fig. 11, including an extract AAL5 type message step;
Fig. 13 illustrates schematically steps preferably executed during the extract AAL5 type message step of Fig. 12;
Fig. 14 illustrates schematically relationships between the steps of Fig. 13 and the software modules of Fig. 6; and
Fig. 15 illustrates schematically steps preferably performed upon receipt of ATM cells.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

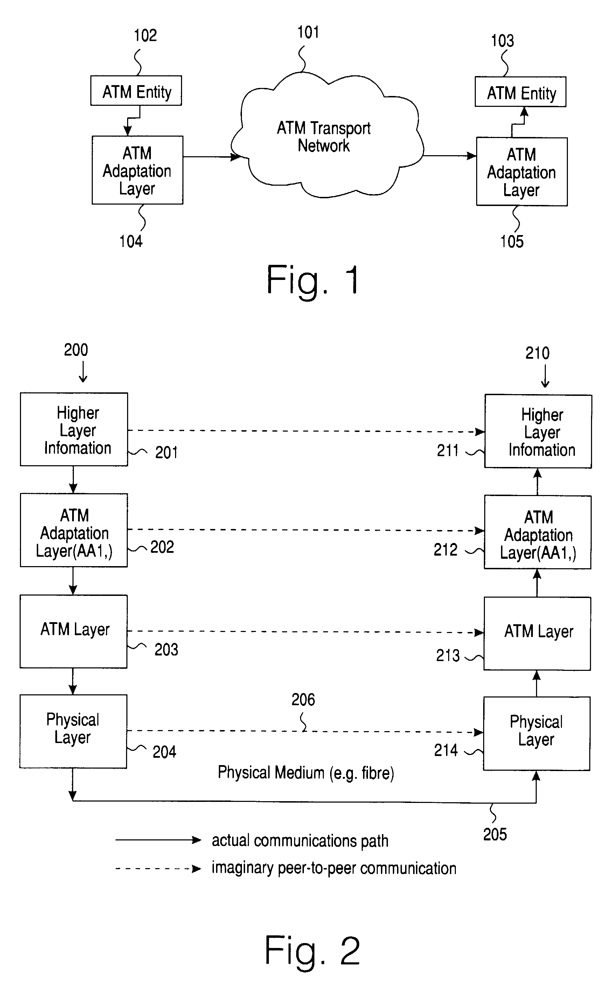

Fig. 1 of the accompanying drawings illustrates schematically an ATM communications network 101. Fig. 1 also shows a first ATM entity 102 and a second ATM entity 103. The ATM entities may comprise hardware having ATM capabilities such as switches, telephones, fax machines, personal computers (PC) attached to a modem, etc. In order for the two ATM entities to communicate across the ATM network, ATM entity 102 is provided with an ATM adaptation layer (AAL) 104 and ATM entity 103 is provided with an ATM adaptation layer 105.

In order for ATM entity 102 to transfer a message to ATM entity 103, AAL 104 is intended to convert data from ATM entity 102 into a format suitable for transport across the ATM network, i.e. package data into an ATM cell format. After the converted signal has been transported across the network 101, AAL 105 is intended to perform a substantially reverse conversion, transforming the cells back into data signals suitable for use by ATM entity 103.

Fig. 2 of the accompanying drawings illustrates schematically a protocol layer/stack model for the data transfer such that illustrated in Fig. 1. A first protocol stack 200 is shown representing a protocol stack which may be used by ATM entity 102 and also a second protocol stack 210 representing a protocol stack for use by ATM entity 103. Higher layer/level information 201, representing for example the type of data suitable for ATM entity 102 is passed to AAL 202 which converts the data into a form which an ATM network, e.g. ATM transport network 101, uses on ATM layer 203. ATM layer 203 converts the data for physical layer 204 which is a form suitable for transmission across a physical medium 205, e.g. an optical fiber. Thus, when an ATM entity which uses data of a type suitable for higher layer information level 201 wishes to transfer data to another ATM entity, the data is passed down through each level (201-204) of the protocol stack, with appropriate conversion of the data taking place at each level, until the data is converted to a form suitable for transfer as ATM cells across the physical link 205. After the data has been transported across physical medium 205 it reaches physical layer 214 of protocol stack 210 associated with a second ATM entity, e.g. ATM entity 103. In a substantially reverse operation, data is converted up through the second protocol stack from physical layer 214 to ATM layer 213 to AAL 212 and finally to higher layer information 211, which may represent data suitable for ATM entity 103.

The AAL serves to perform conversion of higher layer information into ATM cells and for reconstruction of a lower layer signal back to the higher layer level. Conceptually, a format of data used by each layer in the first protocol stack may be substantially equivalent to a corresponding respective layer in the second protocol stack, which may be illustrated by "imaginary peer to peer" communication line 206 between physical layer 204 and physical layer 214 for example.

Current details of standards relating to AAL may be obtained from ITU recommendations and other well-known sources. The AAL is generally organized in two sub-layers: a convergence sub-layer and a segmentation and re-assembly sub-layer. The segmentation and re-assembly sub-layer is concerned with segmentation of higher layer information into a suitable size for an information field of an ATM cell and for re-assembly of contents of an ATM cell information field into higher layer information. Functions performed by the convergence sub-layer include processing of cell delay variation, end to end synchronization and handling of loss and mis-inserted cells. The AAL may perform no function if performance of the ATM layer is sufficient for requirements of a particular communications service. In this case, users may be able to make use of all 48 octets (an octet being defined as 8 bits of data, also called a "byte") in an information field/payload portion of an ATM cell. Addition of headers and trailers in each sub-layer, together with segmentation of user information may be necessary to "fit" user information into at least one ATM cell, i.e. if the user data comprises more than 48 octets of data, it may be necessary to divide the user data into segments in order to transfer the data using a plurality of ATM cells and then re-assemble the data segments back into data representing the original user information after the transfer.

Different types of AAL have also be defined by the ITU. AAL type 5 is intended to provide a class of service known as "class D" intended for connectionless mode of communication, but is intended to be simple and requiring less overheads than earlier types of AAL. A type of ATM cell used by an AAL may be called a "protocol data unit" (PDU). AAL5 is typically used to transfer high bandwidth data, but in the preferred embodiment low bandwidth data is transferred by means of AAL5 frames using bandwidth on existing hardware which may not normally be used, or if used would usually transfer OAM data. Thus, the preferred embodiment transfers low bandwidth data (e.g. used for setting up connections) in a non conventional manner using bandwidth which may not be normally be used, thereby providing a facility which would conventionally require hardware to be added to the ATM entities in order to transfer low bandwidth data.

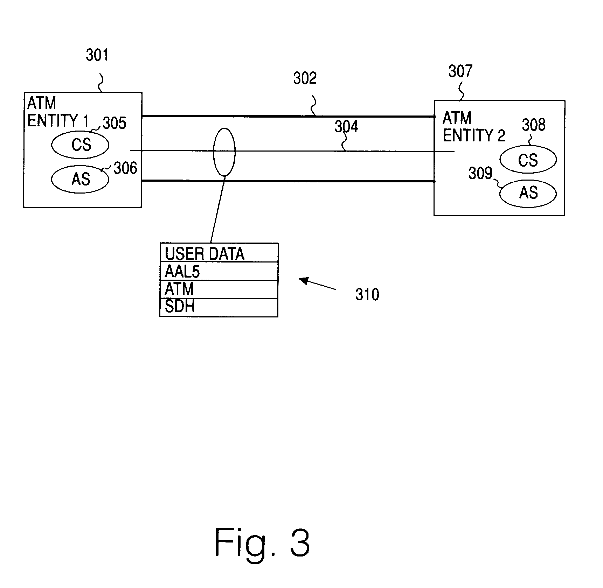

Fig. 3 of the accompanying drawings illustrates schematically a first ATM entity 301 in an ATM network which is connected to a second ATM entity 307 by means of a physical link 302.

Diagram elements shown in oval boxes may represent software components and diagram elements shown in rectangular boxes may represent hardware elements.

The physical link 302 preferably provides a transmission path, for example virtual channel (VC) 304, for communication between the entities. The entities may be located at geographically distant locations and VC 304 may be routed through several transmission paths in an ATM network. Furthermore, the entities may include their own cross connections switching devices or would use such devices provided in the ATM network. ATM entity 301 and 307 may comprise any ATM network node device, for example a processor connected to an ATM card. ATM entity 301 preferably includes a processor and memory executing communications software 305 and at least one application software 306. Similarly, ATM entity 307 preferably comprises a processor and memory executing communications software 308 and at least one application software 309.

A protocol stack 310 is shown for VC 304. Levels of the protocol stack 310 comprise (higher to lower level): user data, AAL5, ATM and synchronous digital hierarchy (SDH).

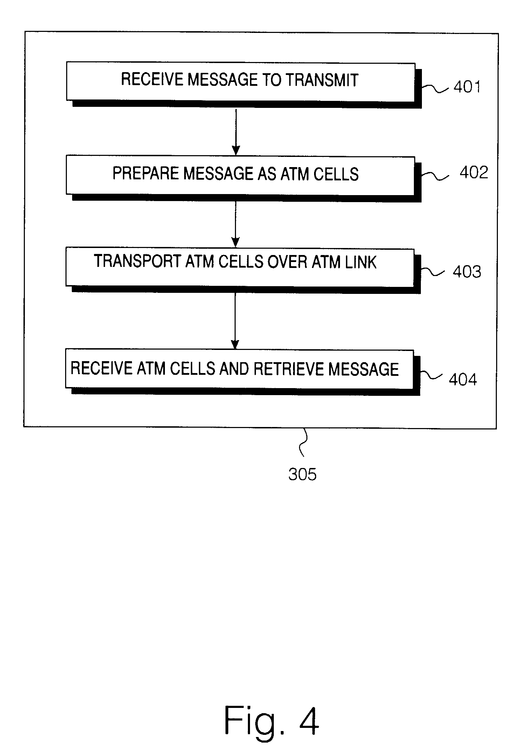

Fig. 4 of the accompanying drawing illustrates steps typically executed by the communication software, e.g. communication software modules 305 and 308 executing on ATM entities 301 and 307, respectively. For ease of explanation, examples relating to ATM entities 301 and 307 will be described herein, however, those skilled in the art will appreciate that the principles may relate to any other ATM entities in a network. At step 401 communication software 305 receives (e.g. from application software 306) a message to transmit to another ATM entity, e.g. ATM entity 307. At step 402 the communication software prepares the message data for transfer as at least one ATM cell for transmission according to a protocol stack required for transmission of an AAL5 message, i.e. protocol stack 310 for transfer to ATM entity 307 over VC 304.

At step 403 the ATM cells prepared for transmission are transported over the appropriate ATM link, e.g. VC 304 to ATM entity 307. At step 404, the communications software executing on the ATM entity receiving the ATM cells, e.g. communications software 308 of ATM entity 307, receives the ATM cells and retrieves the message from them according to the preferred embodiment, possibly transferring the message to application software executing on the receiving ATM entity, for example application software 309.

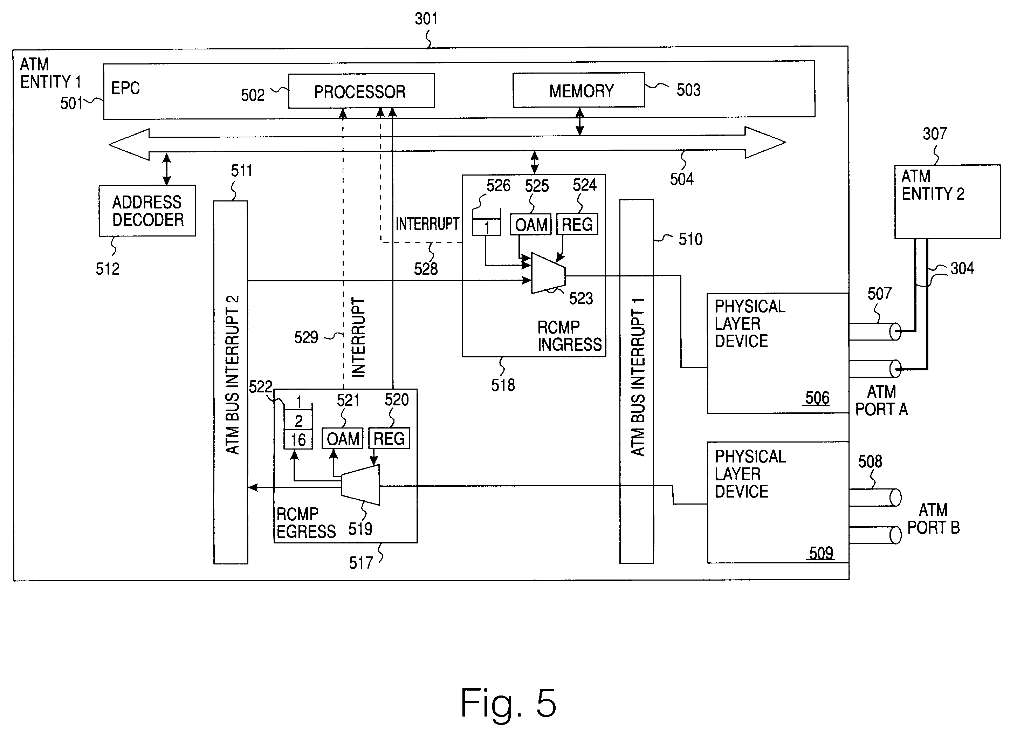

Fig. 5 of the accompanying drawings illustrates hardware components preferably included in ATM entity 301 of Fig. 3 which may be utilized during execution of communications software 305 as well as links to other ATM entities, for example ATM entity 307.

The ATM entity 301 comprises an embedded processor card (EPC) 501. The EPC 501 comprises a processor, preferably a known MPC 860 processor, and a memory 503, preferably comprising dynamic random access memory (DRAM). Preferably, the EPC 501 executes all the software on the ATM entity 301, including communications software 305 and application software 306. The ATM entity 301 preferably also comprises a bus 504 which can transfer data to/from the EPC's processor 502 and memory 503.

The ATM entity 301 may also comprise at least one physical layer device, such as physical layer device 506 and physical layer device 509. Preferably, each physical layer device comprises a known SUNI (PM5347 Saturn User Network Interface Plus) device, capable of providing a physical bi-directional STM-1 (synchronous transfer mode) 155.5 Mbits/s electrical interface and is preferably capable of terminating/generating SDH frames and ATM cells. The physical layer devices may provide the ATM entity with framing and overhead handling and may also identify ATM cells. Physical layer device 506 may provide a dedicated ATM port A 507 and physical layer device 509 may provide a dedicated ATM port B 508. The physical layer devices may act as ports for internal and extemal physical links between the ATM entity 301 and other network components, for example ATM entity 307 may be connected to ATM entity 301 by means of VC 304 connected to ATM entity 301 by means of ATM port A 507.

The ATM entity model 301 may further comprise 2 ATM bus interface devices, 510 and 511, each preferably capable of providing a priority ATM cell mechanism between two or more devices interfaced to each bus controller.

ATM entity 301 may further comprise a routing control monitoring and policing (RCMP) ingress device 518 and an RCMP egress device 517. The RCMP devices are intended to perform most hardware functions that the communications software 305 requires, provided that the physical layer devices 506 and 509 are configured to allow ATM cells to be received and transmitted. RCMP egress device 517 comprises an input/output (I/O) component 519 which is capable of transferring data to a queue 522 and an OAM (operation and maintenance) unit 512 as well as receiving data from registers 520. RCMP ingress device 518 comprises an I/O unit 523 which is capable of receiving data from a queue 526, OAM unit 525 and registers 524. ATM VCs leading from physical layer devices 506 and 509 into RCMP egress device 517 and ATM VCs leading from RCMP ingress device 518 to physical layer devices 506 and 509, possibly via ATM bus interface 510, may be called "transfer line cells". ATM VCs leading from RCMP egress device 517 to ATM bus interface 511 and ATM VCs leading from the bus controller to RCMP ingress device 518 may be called "transfer station cells". Both RCMP devices 517 and 518 can preferably communicate with EPC 501 via bus 504. RCMP devices 517 and 518 may also be capable of communicating directly with processor 502 by means of interrupts 528 and 529, respectively. RCMP egress device 517 may also be capable of asserting a dynamic memory access request (DREQ) directly to processor 502. The ATM entity 301 may also comprise an address decoder 512, which may be capable of communicating with bus 504.

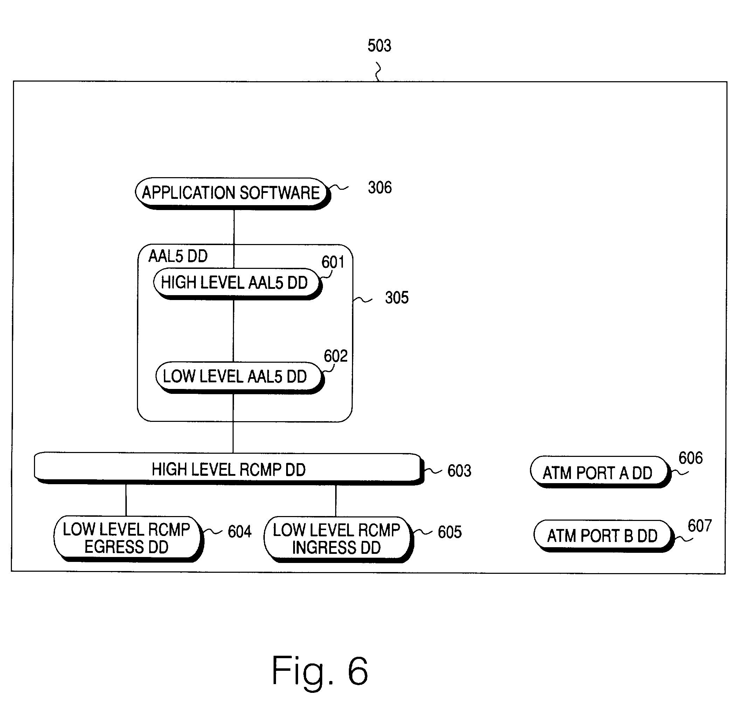

Fig. 6 of the accompanying drawings illustrates schematically architecture of software modules which may be stored in memory 503 of EPC 501. Communication software 305 may communicate with application software 306. Application software 306 may be considered to be a higher level software component than communication software 305. In the preferred embodiment, communication software 305 comprises a device driver suitable for transmitting low bandwidth data from the ATM entity upon which it is executing to at least one other ATM entity connected via the network. The low bandwidth data is preferably converted according to a protocol stack such as protocol stack 310 wherein the message is first packaged into an AAL5 frame which is then preferably segmented into at least one ATM cell for transmission to the other ATM entities. AAL5 device driver 305 is preferably implemented as an operating system level driver, so that software entities at a lower level may appear as part of its functionality to users or higher level software applications such as application software 306.

The communication software 305 may be considered to comprise two main modules for transferring low bandwidth AAL5 data as ATM cells. Communication software 305 comprises high level AAL5 device driver module 601 and low level AAL5 device driver module 602. The two modules 601 and 602 may provide functions which receive ATM cells, remove headers and assemble an AAL5 frame from the data contained within the ATM cells, then perform a cyclical redundancy check (CRC) 32 and other checks, finally removing data payload from the AAL5 frame and presenting it to upper layers of software when an ATM cell is received by the communications software 305 and performing substantially reverse operations when an AAL5 frame is to be transmitted as ATM cells by the software.

The low level AAL5 device driver module 602 may communicate with lower level software components, including high level RCMP device driver 603. Since upper layers of the architecture's software are not concerned if receiving and transmitting of AAL5 frame data is performed in one or many RCMP devices, the high level RCMP device driver module 603 is provided. For example, module 603 may provide bi-directional VC configuration and transmit information to the RCMP ingress device and vice versa. High level RCMP device driver software 603 may communicate with low level RCMP device driver software below it, in this instance, low level RCMP egress device driver 604, intended for controlling RCMP egress device 517 and low level RCMP ingress device driver 605, intended for controlling RCMP ingress device 518. It will be understood that at least one device may be controlled by one or more low level device driver software modules, each device driver module being controlled by high level device driver 603.

The ATM's memory 503 may also comprise ATM A port device driver 606 for controlling physical layer device 506 and ATM port B device driver 607 for controlling physical layer device 509. Errors in transfer of data according to the protocol stacks are preferably resolved by high layers of the software.

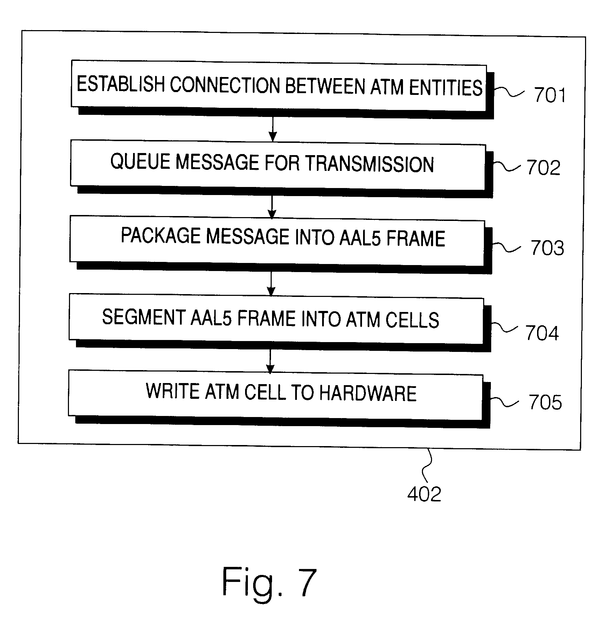

Fig. 7 of the accompanying drawings illustrates steps preferably performed by the communications software 305 and involving some of the software modules illustrated in Fig. 6 at step 402 of Fig. 4 in order to prepare an ATM cell for transmission. At step 701 a connection is established between ATM entities 301 and 307, preferably VC 304. This may achieved using conventional protocols and commands in order to establish a bi-directional VC between the two ATM entities. At step 702 a message to be transferred is stored in a queue in order to be prepared for transmission. At step 703 the message is packaged into an AAL5 frame, i.e. the message is stored as payload data in a section of an AAL5, and additional data, e.g. for use in routing the frame through the network may also be added to the frame. The frame is then segmented into at lest one ATM cell at step 704. At step 705 the ATM cells are written to hardware for transmission preferably on a virtual channel (possibly in a virtual path) across a transmission path, such as VC 309.

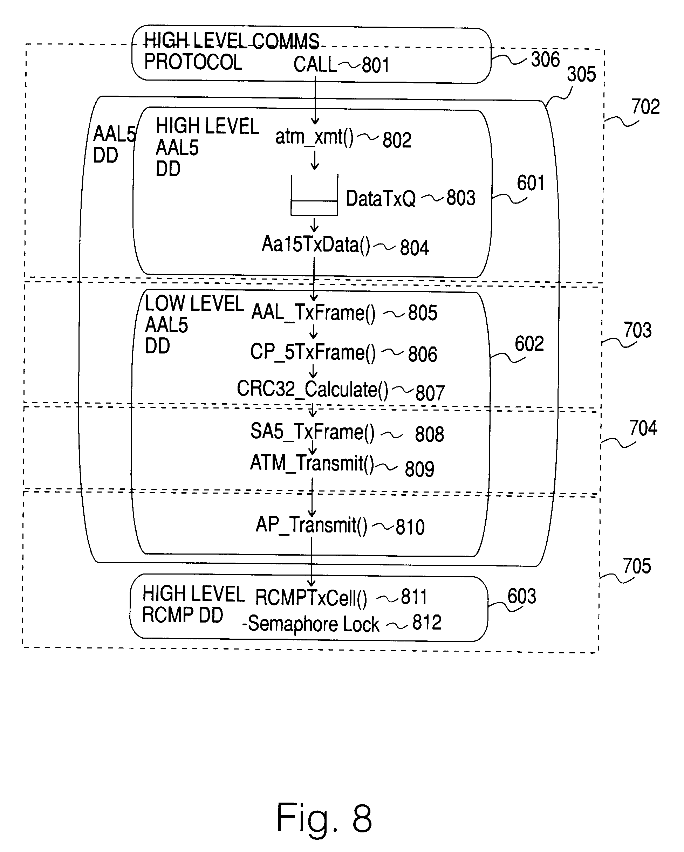

Fig. 8 of the accompanying drawings illustrates schematically how the communications software 305 and other software modules in the EPC's memory 503 may cooperate in order to execute the steps shown in Fig. 8. A high level communications protocol, preferably part of application software 306 can request transfer of a low bandwidth data message to at least one other ATM entity, e.g. ATM entity 307, by making a call 801 to a function *atm_xmt()* 802 of high level AAL5 device driver software 601. High level AAL5 device driver 601 may write the data to transmit queue *DataTx*Q 803. A call to *atm_xmt( )* function 802 returns immediately after data passed into it is stored in queue 803. The data structure on the queue preferably has VC connection details and the message data to be sent, which are preferably contained within the message. A data to transmit queue may be provided per ATM port. A function *Aal5TxData()* 804 waits on queue 803 and copies data pointed to by an entry on the queue and creates a data structure that low level AAL5 device driver 602 understands. Functions 801, 802 and 804 may represent step 702 of Fig. 7. *Aal5TxData()* function 804 calls an *Aal*_*TxFrame()* function 805 of low level AAL5 device driver 602 with the AAL5 frame data. Every AAL5 frame will preferably be completely transferred before a next entry on queue 803 is dealt with. The low level AAL5 device driver 602 may apply further functions to the frame, including *CP_5TxFrame()* function 806 and *CRC32_Calculate()* function 807. Functions 805 to 807 may represent step 703 of Fig. 7.

The low level AAL5 device driver 602 then applies a *SA5_Txframe()* function 808 which segments the AAL5 frame into 48 octet cell buffers and then calls an *ATM_Transmit()* function 809. Function 808 will continue to call function 809 until the entire AAL5 frame is sent. Functions 809 and 808 may represent step 704 of Fig. 7.

For each ATM cell created as a result of segmenting the AAL5 frame, the *ATM_Transmit()* function 809 appends an ATM header, making sure that a last ATM header to be appended for the AAL5 frame has a rightmost bit of its AUU set to 1 (see hereinbelow). After appending the final ATM header, function 809 calls an *AP_Transmit()* function 810. Function 810 copies the ATM cell from the low level AAL5 device driver 602 data structure to a 53 octet array required by a *RCMP_TxCell()* function 811 of high level RCMP device driver 603, calling the function indicating that the cell is not an OAM cell. The *RCMP_TxCell()* function 811 may insert additional data into the cell in order to write the ATM cell to RCMP ingress device 518. When function 811 is called, a semaphore lock 812 may be set up in order to attempt to ensure that transmission of other ATM cells is not interrupted during the transmission of the current ATM cell. After the ATM cell has been transmitted, the semaphore lock is preferably removed. Functions 810 - 812 may represent step 705 of Fig. 7.

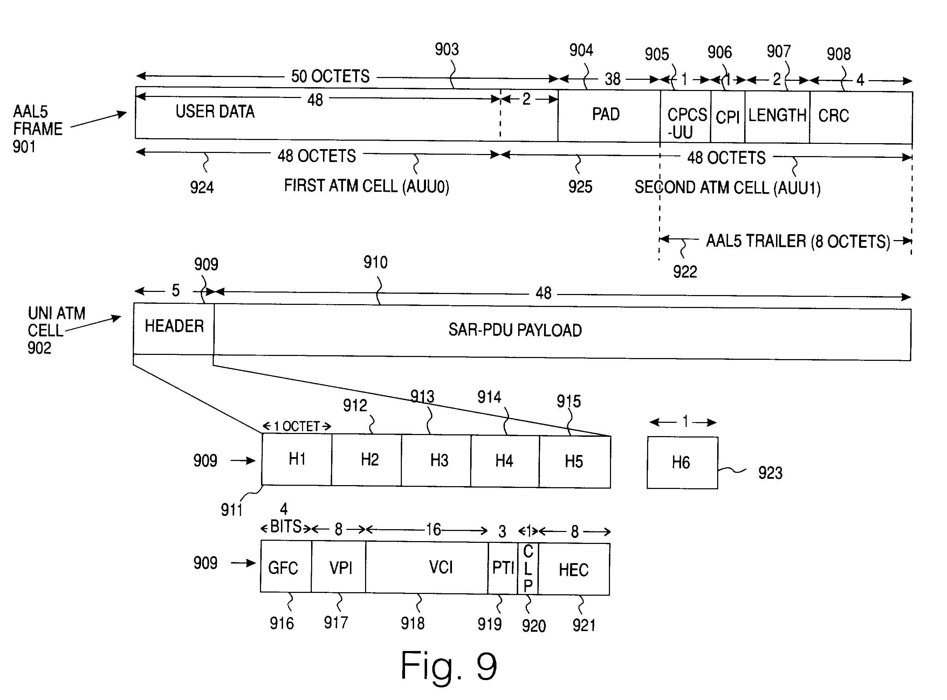

Fig. 9 of the accompanying drawings illustrates an AAL5 frame 901 and a UNI (User Network Interface) ATM cell 902 defined according to ITU standard 1.363. It will be understood that modifications may be made to standard AAL5 frames and ATM cells, or the standards may be amended over time. However, those skilled in the art will appreciate that the invention as described herein can be modified in order to accommodate any such changes. The AAL5 frame 901 comprises a user data portion 903 which can comprise between 0 and 65,535 octets, and preferably 256 octets. The AAL5 frame 903 also comprises a padding (PAD) portion 904, which is intended to ensure that a whole number of ATM cells are generated for a segmented AAL5 frame. PAD portion 904 may comprise between 0 and 47 octets and in the preferred embodiment a number selected by a configurable constant. AAL5 frame 901 also comprises a 1 octet common part converging sub-layer - user to user (CPCS-UU) indicator 905 which is intended to transparently transfer any information between peer entities. The frame may also comprise a 1 octet common part indicator (CPI) 906 which may be used as an alignment field (preferably a configurable constant). The frame may also comprise a LENGTH portion 907, which preferably comprises 2 octets containing a value indicating a size of user data portion 903 (in octets) excluding PAD 904. The frame also comprises a cyclic redundancy check (CRC) portion 908, preferably comprising 4 octets used for calculating a check sum for user data 903. The 8 octets labelled 905 - 908 may be called a "trailer" of the AAL5 frame, denoted by arrows 922.

UNI ATM cell 902 comprises a 5 octet header 909 (preferably used for storing data for routing the cell across the ATM network) and a 48 octet payload 910 (preferably used for storing user data to be transferred), giving a total ATM cell length of 53 octets. Header 909 may comprise five sections H1 to H5, labelled 911 to 915, each being 1 octet in length. A sixth 1 octet header section, H6, 932 may also exist for some ATM cells, with a nature of data stored in the H6 octet being undefined. A header 909 may comprise a 4 bit generic flow control (GFC) portion 916; an 8 bit virtual path identifier (VPI) portion 917; a 16 bit virtual channel identifier (VCI) portion 918; a 3 bit payload type identifier (PTI) portion 919; a 1 bit call loss priority (CLP) portion 920; and a 8 bit header error check (HEC) portion 921. The VPI and VCI data may be used to route the cell over a virtual path (VP) and possibly a specified virtual channel within the virtual path.

Payload type identifier (PTI) 919 may have four formats, each format being given by a particular bit pattern denoting a particular type of data within the ATM cell's payload 910:

| | |
|---|---|
| XX0 | AUU (ATM user to user indication) - first, middle ATM cell for an AAL5 frame (wherein a value "X" can be 0 or 1) |
| XX1 | AUU - last ATM cell for an AAL5 frame |
| 100 | OAM F5 segment associated cell |
| 101 | OAM F5 end to end associated cell |

In the example shown in Fig. 9, the AAL5 frame's user data portion 903 comprises 50 octets of data, thus, it will require segmentation into more than one ATM cell for transfer, as an ATM cell's payload 910 comprises 48 octets. Therefore, PAD portion 904 of AAL5 frame 901 will comprise a number of octets to ensure that a whole number of (preferably consecutive) ATM cells are generated by segmentation, in this case, two ATM cells. The number of PAD octets can be calculated as follows:
AAL5 frame user data 903 - ATM cell payload 910 = 50 - 48 = 2 octets of user data from AAL5 frame to store in payload 910 of second ATM cell.
2 + AAL5 trailer 922 = 2 + 8 = 10 octets total data to store in payload 910 of second ATM cell.
ATM cell payload 910 - 10 = 48 - 10 = 38 = number of octets in PAD 904

A default value of 0 will be written to CPCS-UU octet 905 of the AAL5 frame. A default value of 0 will be written to CPI octet 906 of the AAL5 frame. A value of 50 (number of user data octets) will be written to length portion 907 of the AAL5 frame. CRC portion 908 will contain a check sum value calculated for the 50 octets of user data in portion 903 of the AAL5 frame.

As the AAL5 frame requires segmentation into 2 ATM cells for transfer (typically 3 to 5 ATM cells may be necessary for transferring a 256 octet payload), a first ATM cell will contain a first 48 octets of user data portion 903 in the ATM cell's payload 910, illustrated by arrows 924. The VPI and VCI portions 917 and 918 of the first ATM cell's header will contain values indicating a VPI and VCI upon which the ATM cell will be transferred. The PTI bits 919 of the first ATM cell's header will comprise XX0, denoting that the ATM cell is the first for the AAL5 frame.

For the second ATM cell to be transferred for the AAL5 frame, the ATM cell's payload portion 910 will comprise a final 2 octets of the AAL5 frame's user data portion 903, 38 octets of the frame's PAD portion 904 and the frame's 5 octets of trailer information 922, illustrated by arrows 1025. VPI bits 917 and VCI bits 918 of the second ATM cell's header may contain the same VPI and VCI information as the first ATM cell. PTI bits 919 of the second ATM cell's header will comprise a value of XX1, denoting that the second ATM cell is the last to be transferred for the AAL5 frame.

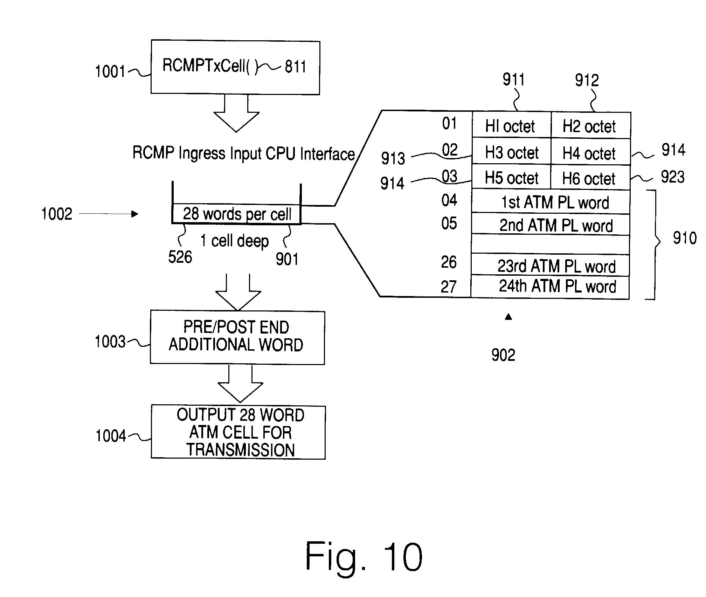

Fig. 10 of the accompanying drawings illustrates schematically the RCMP ingress 518 device's queue 526 and steps performed on an ATM cell to be transmitted. After *RCMPTxCell()* function 811 of high level RCMP device driver 603 has been called, additional data comprising an extra word (a word being defined as 2 octets) will preferably be added to the ATM cell to be transmitted. The RCMP ingress device's queue 526 can store data representing a single 27 word cell. The queue receives 1002 a 27 word ATM cell as input, adds 1003 an additional word of data to the cell and outputs 1004 a 28 word cell for transmission. The RCMP ingress device can be configured to translate the intemal cells to outgoing (line) ATM cells with correct VPI/VCl numbers by prepending the cell with a word to identify one of the output ATM ports, i.e. physical layer device 506 or 509. In the preferred embodiment, ATM (station) cells incoming from ATM bus interface 511 comprise 27 words (54 octets) in size and the outgoing (line) will comprise 28 words (56 octets), thus having one extra word prepended, i.e. inserted as a first word in the cell. A number of words required by the RCMP ingress device is preferably 27 with header translation, and an example of the configuration of the device may be as follows:
0X08 (address relative to RCMP ingress device, "X" denoting 0 or 1): input cell FIFO configuration:
   CELLEN, total number of words prepended to input ATM cell:
      0 prepend words added, set to binary 0000
   CELLPOST, number of postpend words added to input cell:
      0 postpend words added, set to binary 0000
   HECUDF, whether or not HEC and user defined octets are to be transferred from input to output:
      ATM cell will remain as 27 words, i.e. with HEC and
      USR words, set to 1.
OX11: microprocessor insert buffer control and status:
   INSRST, reset insert FIFO, performed on initialization:
      set to transition from binary 0 to 1
   UPHDRX, cells written to insert buffer are translated according to same rules as input buffer, binary 1
   OLEN, number of words inserted into insert buffer:
      same length as input cell, 21 words, set to binary 010
   PHY, physical link identification, preferably not used, set to binary 0000

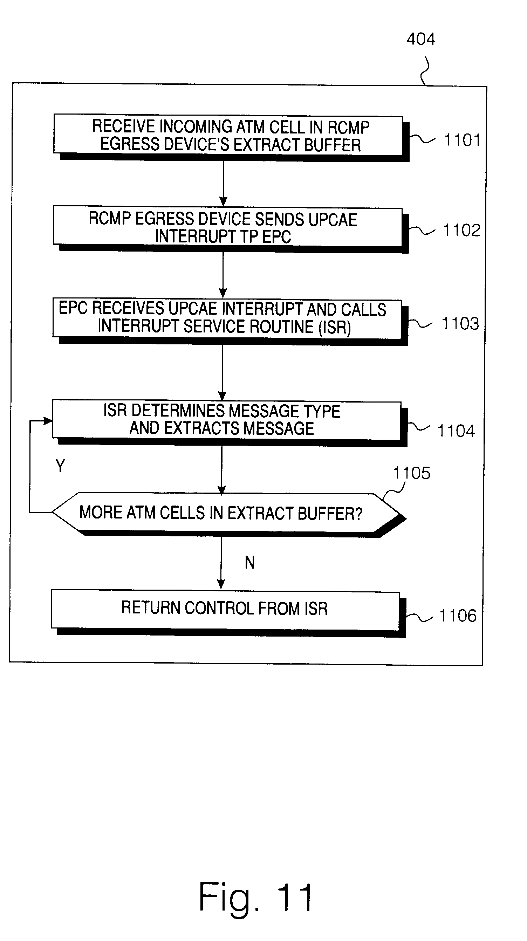

Fig. 11 of the accompanying drawing illustrates steps preferably performed during, for example, step 404 of Fig. 4, when ATM cells transported over an ATM link are received at their destination entity. For ease of description with respect to the preceding drawings, the receiving ATM entity described with reference to the steps of Fig. 11 comprises ATM entity 301. At step 1101 the ATM entity 301 receives an incoming ATM cell in its RCMP egress device 517. The incoming ATM cell may arrive at the ATM entity 301 via the ATM ports of physical layer devices 506 or 509 and be transferred to the RCMP egress device's I/O unit 519 and then transferred to the egress device's queue/extract buffer 522, where it may be stored.

At step 1102 the RCMP egress device 517 may end a UPCA (microprocessor cell arrival) interrupt to processor 502 of the ATM entity's EPC 501. At step 1103 the processor 502 receives the interrupt and calls an interrupt service routine (ISR), preferably part of communications software 305. At step 1104 the ISR determines that it was called due to an UPCA being sent from RCMP egress device 517 and furthermore that the interrupt resulted due to an ATM cell being present in extract buffer/queue 522.

At step 1104 the ISR determines a type of message contained in the received ATM cell and attempts to extract the message. At step 1105 a question is asked whether any more ATM cells are present in the extract buffer (preferably indicated by a value of 1 in an extract cell available (ETXCA) address of the RCMP egress device 517). If the question asked at step 1105 is answered in the affirmative then control is passed back to step 1104, otherwise control is passed onto step 1106, wherein a mask (as described hereinbelow) placed on the UPCA interrupt is removed and control is returned from the ISR.

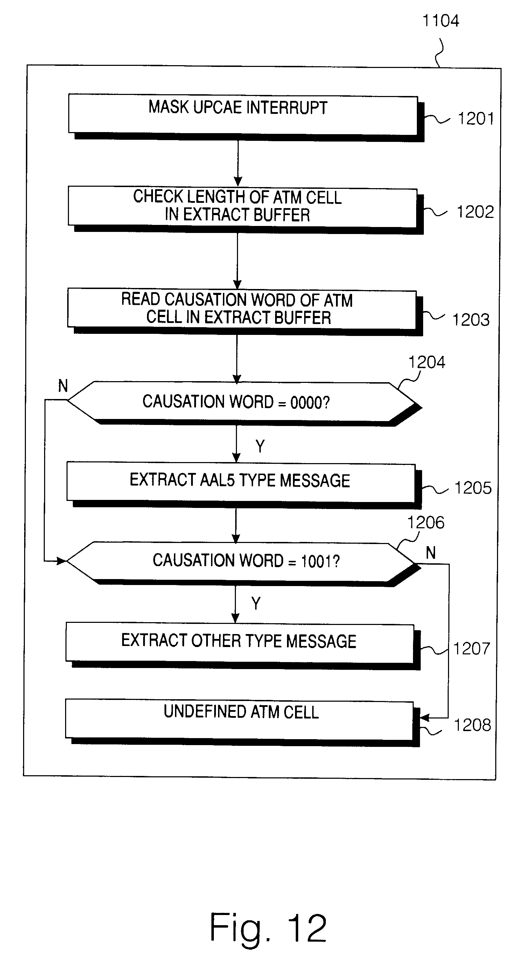

Fig. 12 of the accompanying drawings illustrates steps preferably executed by the ISR and possibly other software modules during step 1104 of Fig. 11. At step 1201 the UPCA interrupt is masked so that no more may occur. At step 1202 the ISR checks a length of an ATM cell in the extract buffer to see whether it is equal to a length of ATM cell expected (28 words). At step 1203 the ISR reads a first word, called a "causation word" (address 0x18 relative to RCMP egress device) of the first cell in the extract buffer. At step 1204 a question is asked whether the causation word contains a value 0000. If the question asked at step 1204 is answered in the affirmative, then control is passed onto step 1205, wherein the ISR invokes extraction of an AAL5 type of message. If the question asked at step 1204 is answered in the negative, then control is passed onto step 1206, wherein a question is asked whether the causation word contains a value 1001. If the question asked at step 1206 is answered in the affirmative then control is passed onto step 1207, wherein the ISR may invoke extraction of another type of message. If the question asked at step 1206 is answered in the negative, then control is passed on to step 1208, wherein the ISR assumes that an undefined type of ATM cell has been received. Upon receipt of an undefined type of ATM cell, the remaining 27 words of the cell may be read, a counter representing a number of undefined cells received may be incremented (preferably a value representing the count of undefined cells is stored in a causation word, see hereinbelow) and the ISR returns control. Control and instrumentation software executing on a work station connected to the network's ATM entities via an Ethernet link may monitor occurrences of undefined ATM cells and may provide statistical data of such data transfer.

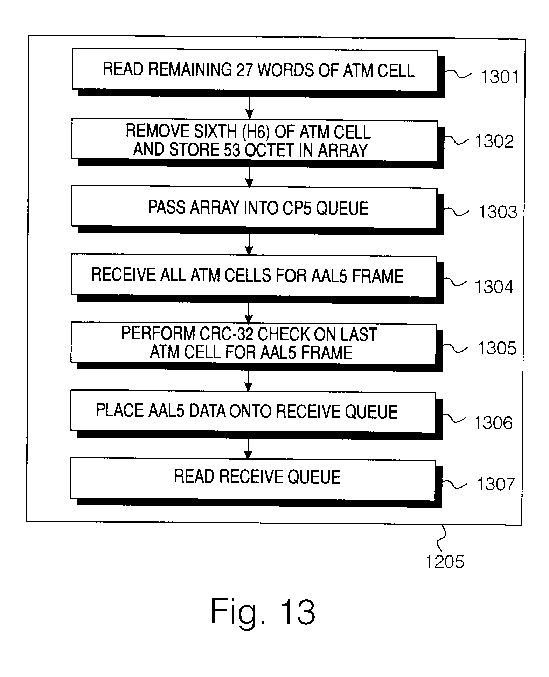

Fig. 13 of the accompanying drawings illustrates steps preferably executed during step 1205 of Fig. 12 in order to extract an AAL5 type of message from the received ATM cell. At step 1301 a remaining 27 words (following the first word) of the ATM cell are read. At step 1302 a sixth octet (typically H6 octet 1023 of the ATM cell's header) may be removed and the remaining 53 octets of the ATM cell are stored in an array. At step 1303 the array is passed into a *CP5_RX* queue. At step 1304 remaining ATM cells for the AAL5 frame are read so that the AAL5 frame may be re-assembled from the ATM cells' data. At step 1306 a CRC-32 check is performed on a final ATM cell (denoted by the AAU data in the cell's PTI bits 1019) for the AAL5 frame. At step 1306 data relating to the AAL5 frame is placed onto a receive queue. At step 1307 the data on the receive queue may be read, for example, by a software application 306 for which the AAL 5 frame's low bandwidth message was intended. It will be understood that the above steps may be repeated for re-assembling a plurality, possibly a stream, of AAL5 frames which were segmented into ATM cells prior to transmission.

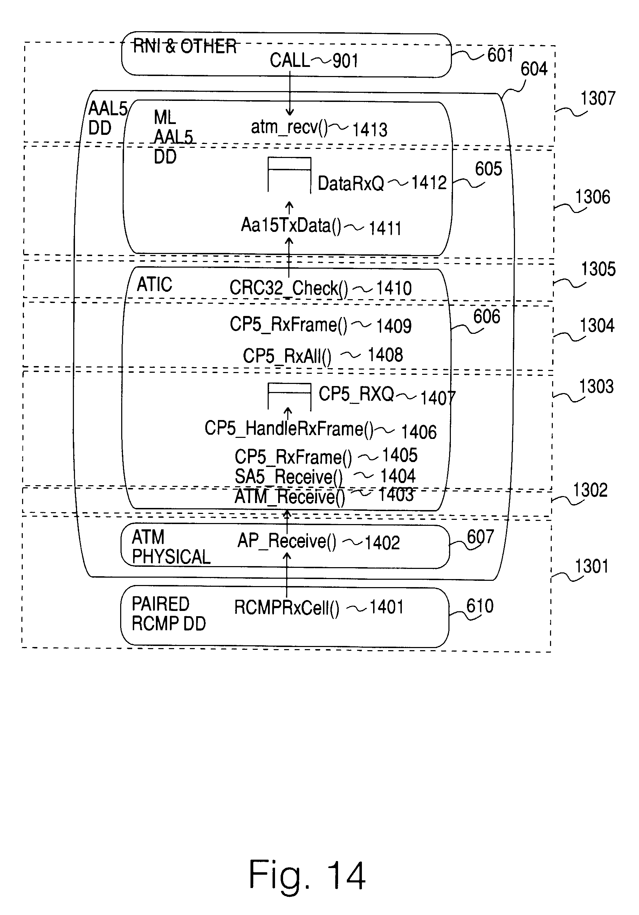

Fig. 14 of the accompanying drawings illustrates functions of communications software 305 and other software modules preferably used to implement the steps shown in Fig. 13. *RCMPRxCell()* function 1401 of higher level RCMP device driver 603 is used to collect received cells from the RCMP egress device. Whilst function 1401 is collecting the ATM cells, it may also obtain a destination of the ATM cell's message, usually using the data contained within its header and stores the data as a 53 octet array and then calls an *AP_Receive(* ) function 1402 of low level AAL5 device driver 602. Function 1402 copies the 53 octet array into cell buffers that functions of the low level AAL5 device driver 602 require and calls an *ATM_Receive( )* function 1402. Functions 1401 and 1402 may be considered to implement step 1301 of Fig. 13.

*ATM_Receive* function 1403 may be considered to implement step 1302 of Fig. 13. Function 1403 may check the ATM cell and identify a destination (e.g. a particular software application of application software 306) of its message. Function 1403 may also remove the ATM header of the ATM cell and pass the ATM cell's payload data onto a CP5 layer. A *SA*5_*Receive*( ) function 1404 and a *CP5_RxFrame( )* function 1405 and a *CP5_HandleRxFrame( )* function 1406 may convert and transfer the ATM cell's data into a form suitable for storage in the CP5 queue *(CP5_RXQ)* 1407, thereby implementing step 1303 of Fig. 13.

*CP5_RxAll* function 1408 may represent a task boundary, i.e. steps executed by software outside the ISR. Function 1408 and a *CP5_RxFrame* function 1409 may be used to implement step 1304 of Fig. 13. A function *CRC32_Check( )* 1410 may be used to perform a CRC-32 check on the last ATM cell for the AAL5 frame in accordance with step 1305 of Fig. 13.

Once functions 1403 to 1406 and 1408 and 1410 of low level AAL5 device driver 602 have processed a single AAL5 frame, data relating to the frame is passed on to an *Aal5RxData( )* function 1411 of high level AAL5 device driver software 601. Function 1411 places the AAL5 data onto the receive queue, *DataRxQ* queue 1412, one such queue existing for each AAL5 frame. When data relating to the entire AAL5 frame has been placed on *DataRxQ* the task may return to the function *CP5_RxQ* 1407 to wait for more incoming AAL5 frames.

Data on the receive queue 1412 may be read by appropriate software modules, for example application software 306, by means of the software application calling an *atm_recv( )* function 1413 of high level AAL5 device driver 601. If function 1413 indicates that a message for the application which made the call is waiting on the receive queue 1412 then the low bandwidth message data may be copied from the high level AAL5 device driver 601 to application software 306, otherwise the application software 306 may wait until a message relating to a particular frame is present on the receive queue 1412.

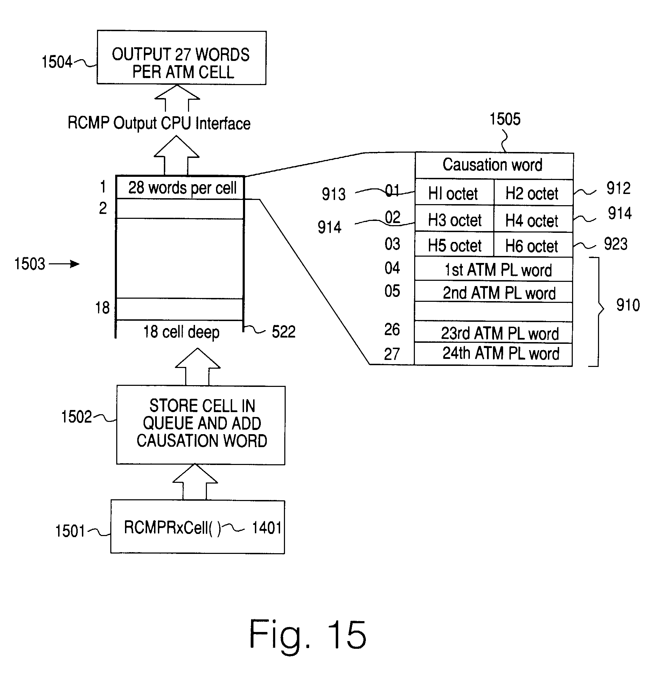

Fig. 15 of the accompanying drawings illustrates schematically the RCMP egress 517 device's queue 522 and steps performed on a received ATM cell. After *RCMPRxCell( )* function 1401 of high level RCMP device driver 603 has been called at step 1501, data from the received cell may be stored in RCMP egress 517 device's queue 522 at step 1502. A causation word 1505 may also be added and stored along with the cell data. The queue 522 is preferably capable of storing data representing 18 cells, each cell comprising 28 words. The RCMP egress device can be configured on a per ATM cell (line) VPI/VCI basis to either send ATM cells prepended or postpended, i.e. with additional bytes around the ATM cells to the UTOPIA bus controllers or EPC 501. Bits stored as data in the causation word 1505 may be defined as follows:

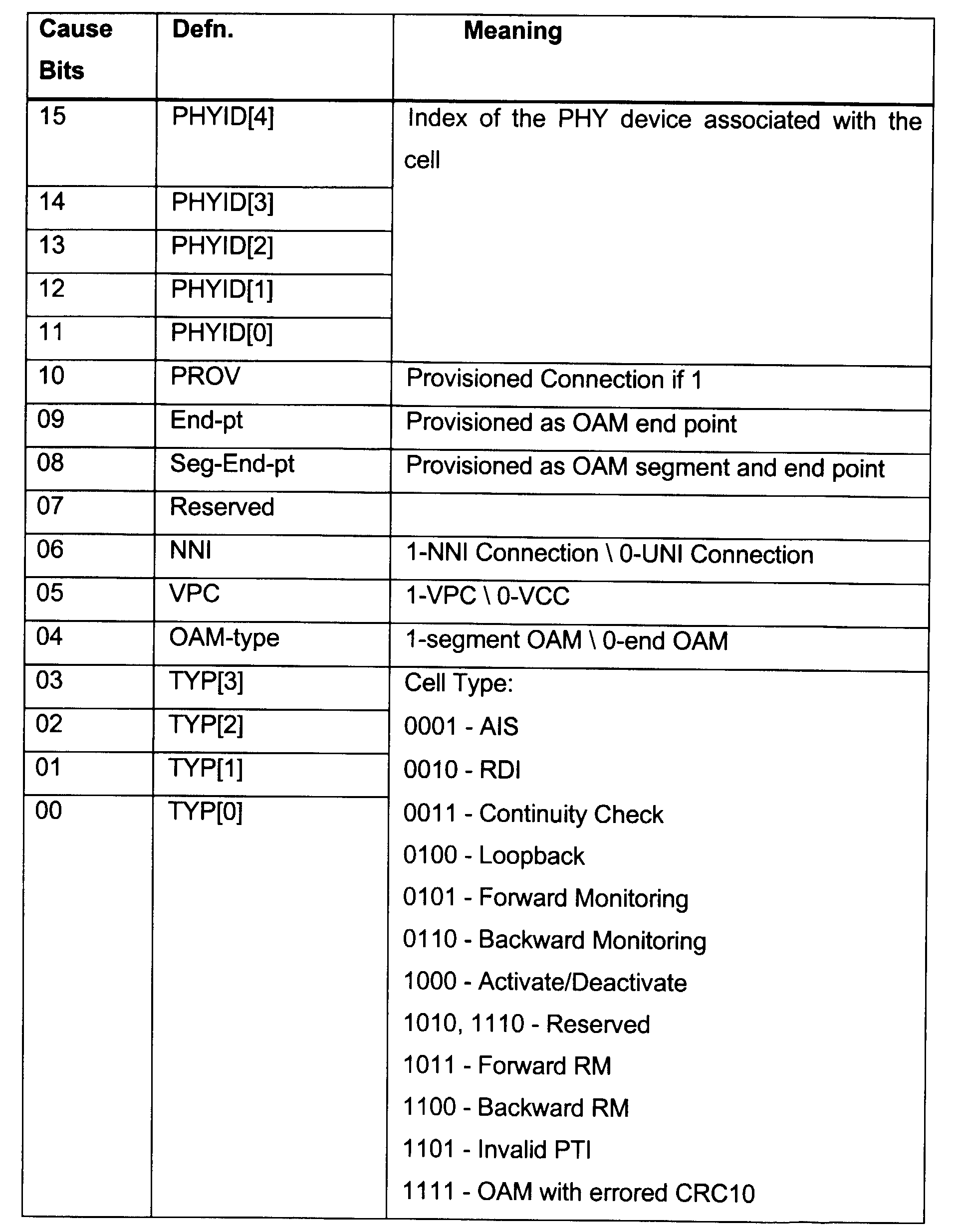

The causation word 1503 may be used to identify a type of cell according to the preferred embodiment as described herein above. The RCMP egress device 517 produces a 27 word output 1504 per ATM cell received on queue 522.

An example of configuration of the RCMP egress device 517 may be as follows:
0X08 (address relative to RCMP egress device, "X" denoting 0 or 1): input cell FIFO configuration:
   CELLEN, total number of words prepended to input ATM cell:
      0 prepend words added, set to binary 0000
   CELLPOST, number of postpend words added to input cell:
      0 postpend words added, set to binary 0000
   HECUDF, whether or not HEC and user defined octets are to be transferred from input to output:
      ATM cell will remain as 27 words, i.e. with HEC and USR words, set to 1.
0X18: cell processor configuration:
   UPURS, user reason symbol, allows a causation word to be prepended to cell extracted, set to 1
0X10: microprocessor extracts buffer control and status:
   EXTRST, reset extract FIFO, preferably done on initialization:
      set to transition from 0 to 1
   DMAEN, DMA enable, preferably disabled, set to 0
   EXTPHYID, extract physical link identification, preferably disabled, set to 0

## Claims

1. Apparatus for transmitting low bandwidth data to at least one asynchronous transfer mode (ATM) entity (301, 307) across an ATM network, said apparatus characterized by comprising:
means for packaging said low bandwidth data into at least one ATM adaptation layer (AAL) 5 frame (305); and
means for segmenting said frame into at least one ATM cell for transfer.

2. Apparatus according to claim 1, wherein said low bandwidth data comprises data transferred at a rate of 1 to 5 megabits (Mb) per second, and preferably up to 2 Mb per second.

3. Apparatus according to claim 1, wherein each said ATM entity comprises at least one processor, and said low bandwidth data is transferred at a rate of 1% or less of an operating speed of said processor.

4. Apparatus according to claim 1, further comprising:
means for receiving message data from application software; and
means for converting said message data into said low bandwidth data.

5. Apparatus for receiving low bandwidth message data from at least one asynchronous transfer mode (ATM) entity across an ATM network, said apparatus characterized by comprising:
means for receiving at least one ATM cell;
means for converting said ATM cell into at least one ATM adaptation layer (AAL) 5 frame; and
means for converting said AAL5 frame into said low bandwidth data message.

6. Apparatus according to claim 5, further comprising:
means for extracting a cell type identifier from said received ATM cells , said identifier capable of identifying said cells as being associated with said AAL5 frame.

7. Apparatus according to claim 5, further comprising:
means for communicating message data with application software; and
means for converting said low bandwidth data into said message data.

8. Apparatus according to claim 5, wherein said low bandwidth data comprises data transferred at a rate of 1 to 5 Mb per second, and preferably up to 2 Mb per second.

9. Apparatus according to claim 5, wherein said ATM entities comprise at least one processor, said low bandwidth data being transferred at a rate of 1% or less of an operating speed of said processor.

10. Apparatus according to claim 5, further comprising:
means for identifying said ATM cells as being associated with at least one AAL5 frame.

11. Apparatus for transferring low bandwidth data between at least two entities (301, 307) in an asynchronous transfer mode (ATM) communications network, said apparatus characterized by comprising:
an ATM device;
means for converting said low bandwidth data into at least one ATM cell; and means for converting data packages of said low bandwidth data into an AAL5 frame, and segmenting said AAL5 frame into at least one ATM cell.

12. Apparatus according to claim 11, wherein said low bandwidth data comprises data transferred at a rate of 1 to 5 megabits (Mb) per second, and preferably up to 2 Mb per second.

13. Apparatus according to claim 11, wherein said ATM device comprises at least one processor, and said low bandwidth data is transferred at a rate of 1 % or less of an operating speed of said processor.

14. Apparatus for transferring low bandwidth data between at least two entities (301, 307) in an asynchronous transfer mode (ATM) communications network, said apparatus characterized by comprising:
a processor and memory;
at least one ingress device (518, 605) comprising data storage means for storing said low bandwidth data prior to transmission from a first said entity;
at least one egress device (517, 604) comprising data storage means for storing said low bandwidth data upon receipt at a second said entity; and
at least two ATM ports (506, 509, 606, 607) capable of connecting said entities,
wherein said processor is configured to use said ingress devices (518, 605) to package said low bandwidth data into at least one AAL5 frame and segment said AAL5 frame into at least one ATM cell; and
said processor is further configured to use said egress device (517, 604) to reassemble said ATM cells into at least one AAL5 frame and extract said low bandwidth data from said AAL5 frame.

15. Apparatus according to claim 14, wherein said low bandwidth data comprises data transferred at a rate of 1 to 5 Megabits per second, and preferably up to 2 megabits per second.

16. Apparatus according to claim 14, wherein said low bandwidth data is transferred at a rate of 1% or less of an operating speed of said processor.

17. A method of transmitting low bandwidth data to at least one asynchronous transfer mode (ATM) entity (301, 307) across an ATM network, said method characterized by comprising the steps of:
packaging said low bandwidth data into an ATM adaptation layer (AAL) 5 frame (703); and
segmenting said AAL5 frame into at least one ATM cell (704).

18. The method according to claim 17, wherein said low bandwidth data comprises data transferred at a rate of 1 to 5 megabits (Mb) per second, and preferably up to 2 Mb per second.

19. The method according to claim 17, wherein said ATM entity comprises at least one processor, and said low bandwidth data is transferred at a rate of 1% or less of an operating speed of said processor.

20. The method according to claim 17, further comprising in the steps of:
receiving message data from an application software; and
converting said message data into said low bandwidth data for transmission.

21. A method of receiving low bandwidth data at at least one transmodem ( ATM) entity said method characterized by comprising the steps of:
receiving at least one ATM cell (1101);
packaging said ATM cell into at least one ATM adaptation layer (AAL) 5 frame(1104); and
converting said AAL5 frame into said low bandwidth data message.

22. The method according to claim 21, further comprising the steps of:
extracting a cell type identifier (1203) from said received ATM cells, capable of identifying said cells as being associated with said AAL5 frame.

23. The method according to claim 21, further comprising the step of:
converting said low bandwidth data into a message data suitable for application software.

24. The method according to claim 21, wherein said low bandwidth data comprises data transferred at a rate of 1 Mb to 5 Mb per second, and preferably up to 2 Mb per second.

25. The method according to claim 21, wherein low bandwidth data is transferred at a rate of 1% or less of an operation speed of said processor.
